# FASCICULE DE BREVET EUROPEEN

(11) **EP 0 538 512 B1**
(45) Date de publication et mention de la délivrance du brevet: **04.10.1995**
(21) Numéro de dépôt: 91118123.8
(22) Date de dépôt: 24.10.1991
(51) Int. Cl.: A23F 5/28, A23F 5/26, A23F 5/50

(54) **Procédé pour la production de café instantané soluble en poudre**
Verfahren zur Herstellung von löslichem Instant-Kaffeepulver
Process for preparing soluble instant coffee powder

(43) Date de publication de la demande: 28.04.1993
(73) Titulaire: SOCIETE DES PRODUITS NESTLE S.A., 1800 Vevey (CH)
(72) Inventeur: Schlecht, Klaus, CH-1350 Orbe (CH)

(56) Documents cités:
- EP-A- 0 056 174
- EP-A- 0 352 842
- FR-A- 926 147
- US-A- 3 790 689
- US-A- 4 673 580

## Description

La présente invention est relative à un procédé pour la production de café instantané soluble en poudre.

La poudre de café soluble est classiquement produite par lyophilisation ou atomisation après l'évaporation d'un extrait de café obtenu par la percolation d'un liquide d'extraction à travers des cellules remplies de café torréfié moulu (Sivetz - Coffee Processing Technology - volume 1 - pages 262, 263 - AVI - 1963).

L'extraction est réalisée à contre courant, c'est-à-dire que de l'eau, sous pression à une température pouvant être comprise entre 150°C et 180°C, est introduite dans la cellule contenant la charge de café torréfié moulu qui a été la plus épuisée en ayant subi N extractions, à la base de celle-ci. L'extrait liquide de cette cellule d'extraction est ensuite amené à traverser la cellule d'extraction contenant la charge de café ayant servi (N-1) fois, cela ainsi de suite jusqu'à ce que l'extrait liquide traverse la cellule qui vient d'être remplie de café torréfié moulu frais.

L'extrait final sort de cette dernière cellule à une température de l'ordre de 100°C.

Ainsi, le café le plus épuisé est soumis à la température la plus élevée alors que le café frais est soumis à la température la plus basse.

On distingue classiquement l'étage sous pression, aussi appelé section d'autoclave et constitué des cellules qui contiennent le café le plus épuisé, de l'étage atmosphérique, constitué des cellules qui contiennent le café le moins épuisé.

A la fin de chaque cycle d'extraction, on vide la cellule contenant le café le plus épuisé, on la remplit de café frais et, après avoir relié convenablement les cellules entre elles, un nouveau cycle d'extraction commence.

Ainsi, dans ce procédé classique d'extraction, il est utilisé un seul liquide d'extraction.

Dans un autre procédé connu sous le nom de "split extraction" et qui sera appelé dans la suite de la description "extraction séparée", deux liquides d'extraction sont utilisés, les cellules d'extraction étant divisées en un étage sous pression et un étage atmosphérique, chaque étage étant extrait avec son propre liquide d'extraction.

Le café contenu dans l'étage atmosphérique est extrait avec un premier liquide d'extraction sous des conditions de température et de pression modérées, alors que le café contenu dans l'étage sous pression est extrait avec un deuxième liquide d'extraction à des conditions de températures et de pression beaucoup plus élevées.

EP 0352842 décrit un procédé de ce type dans lequel l'extrait issu de l'étage atmosphérique est concentré jusqu'à une teneur en matière sèche de environ 40% par cryoconcentration ou osmose inverse, ou par évaporation après entraînement à la vapeur et condensation des arômes volatils qui seront réintroduits ensuite dans l'extrait concentré, l'extrait issu de l'étage sous pression est concentré par évaporation jusqu'à une teneur en matière sèche de environ 40%, les deux extraits sont mélangés et le mélange est congelé et/ou lyophilisé.

Un tel procédé est également décrit dans Pintauro - Coffee Solubilization - p. 41,42 - Noyes Data Corporation - 1975, ainsi que dans le document US 3.790.689.

Il est ainsi produit deux extraits liquides différents qui, après évaporation partielle de l'extrait issu de l'étage sous pression, peuvent être combinés l'un à l'autre et sont ensuite selon des procédés classiques transformés en poudre, par exemple par atomisation ou lyophilisation.

Grâce à ce procédé il est possible d'obtenir un café présentant des qualités organoleptiques nettement améliorées en particulier à cause du fait que le liquide d'extraction de l'étage atmosphérique est exempt des composés qui ont été extraits dans l'étage sous pression.

Dans le procédé décrit dans US 3.790.689, l'extrait issu de l'étage atmosphérique ne subit pas d'évaporation séparée alors que l'extrait issu de l'étage sous pression subit une évaporation qui amène sa teneur en matières sèches à environ 50%. Les deux extraits sont ensuite mélangés et produisent donc un extrait final ayant une teneur en matières sèches d'environ 25%. L'extrait obtenu est ensuite concentré par évaporation avant d'être transformé en poudre. Au cours de cette évaporation les composés volatils provenant à la fois des extraits issus de l'étage atmosphérique et de l'étage sous pression sont perdus. Ceci est bénéfique en ce qui concerne les composés volatils issus de l'étage sous pression qui sont connus pour être à l'origine des caractéristiques organoleptiques désagréables du produit final. En revanche ceci est pénalisant en ce qui concerne les composés volatils contenus dans l'extrait issu de l'étage atmosphérique qui sont en revanche responsables des caractéristiques organoleptiques agréables.

Différentes tentatives ont été faites pour pouvoir produire un extrait final, après mélange, présentant une teneur en matières sèches pouvant atteindre et même dépasser 30% afin de pouvoir, en particulier, diminuer l'énergie nécessaire à l'évaporation ultérieure, avant lyophilisation ou atomisation, pour amener l'extrait à une teneur en matières sèches voisine, ou supérieure, à 40% en poids.

Malheureusement, de telles tentatives ont été confrontées à un problème qui était d'ailleurs déjà présent dans le procédé décrit dans US 3.790.689.

En effet, pour pouvoir obtenir un mélange final présentant la concentration la plus élevée possible, il est évidemment nécessaire de soumettre chacun des deux extraits produits à un traitement d'évaporation.

Malheureusement, deux nécessités opposées se présentent alors. En premier lieu, une évaporation trop importante de l'extrait issu de l'étage sous pression entraîne un blocage des évaporateurs en raison de la composition particulière de cet extrait. En effet, dés que l'on veut atteindre une concentration de cet extrait supérieure à 25% en poids, des composés insolubles apparaissent en quantité importante, quantité qui augmente très vite avec la concentration, qui bloquent l'évaporateur et rendent le procédé irréalisable industriellement.

En second lieu, on ne peut compenser cette limitation de l'évaporation de l'extrait issu de l'étage sous pression par une augmentation de l'évaporation de l'extrait issu de l'étage atmosphérique. En effet, cet extrait ne peut subir une évaporation trop importante à cause de la perte d'arômes qu'elle entraîne, arômes qui, à la différence de ceux contenus dans l'extrait issu de l'étage sous pression, doivent à tout prix être conservés.

C'est la raison pour laquelle le procédé d'extraction séparée n'a pas connu, jusqu'à présent, de réels développements industriels.

La présente invention a donc pour but de résoudre ce problème.

Or, il a été trouvé que, à certaines conditions, il est possible d'évaporer l'extrait issu de l'étage atmosphérique jusqu'à une concentration en matières sèches de 40% en poids et de n'évaporer l'extrait issu de l'étage sous pression que jusqu'à une concentration en matières sèches voisine de 20% en poids en produisant ainsi un mélange ayant une concentration en matières sèches pouvant dépasser 30% en poids, mélange qui sera ensuite concentré par évaporation puis transformé en poudre par tout procédé connu.

Il est en effet possible de récupérer les vapeurs chargées en arômes produits par l'évaporation de l'extrait issu de l'étage atmosphériques de condenser les vapeurs et de concentrer le condensat par tout procédé connu, par exemple par cryoconcentration ou par osmose inverse.

Le concentré obtenu peut ensuite être réintroduit, par exemple dans l'extrait liquide juste avant sa transformation en poudre. Il peut aussi être mis en contact avec une huile qui fixe les arômes, cette huile étant ensuite pulvérisée sur la poudre de café selon un procédé connu.

La présente invention a ainsi pour objet un procédé pour la production de café instantané soluble en poudre par extraction séparée de café rôti moulu contenu dans des cellules de percolation, en produisant un premier extrait liquide issu de l'étage atmosphérique et un second extrait liquide issu de l'étage sous pression, le premier extrait liquide étant évaporé jusqu'à une concentration en matières sèches supérieure à 35% en poids et le second extrait liquide étant évaporé jusqu'à une concentration en matières sèches inférieure à 25% en poids, les deux extraits liquides étant ensuite mélangés, le mélange des deux extraits liquides étant concentré par évaporation pour amener sa teneur en matières sèches à plus de 40% en poids, les vapeurs d'évaporation du premier extrait liquide étant condensées et concentrées, le concentré obtenu étant réintroduit dans le mélange des deux extraits liquides après évaporation de celui-ci.

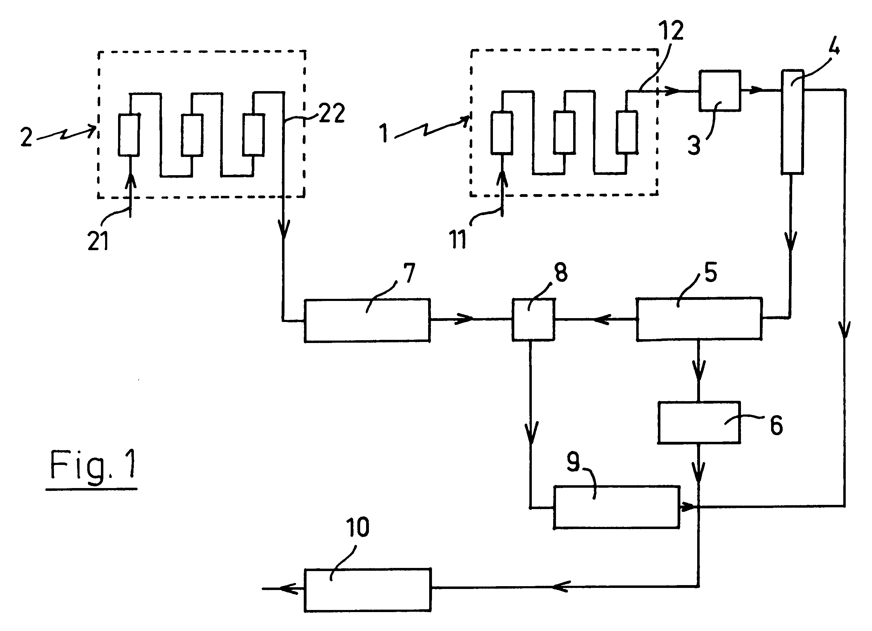

D'autres caractéristiques et avantages ressortiront à la suite de la description qui va suivre faite en référence à la Fig.1 donnée seulement à titre d'exemple non limitatif et qui représente un dispositif pour la mise en oeuvre du procédé.

Comme illustré à la Fig.1, un dispositif d'extraction est constitué de plusieurs cellules de percolation chargées en café rôti moulu, préférablement au nombre de six, reliées entre elles par un dispositif de canalisation approprié. Ce dispositif d'extraction est divisé en un premier groupe de cellules constituant l'étage atmosphérique 1, et un second groupe de cellules constituant l'étage sous pression 2, l'étage atmosphérique 1 étant alimenté en liquide d'extraction par un conduit 11, l'extrait liquide produit étant évacué par un conduit 12. De la même façon, l'étage sous pression 2 présente un conduit d'alimentation 21 et un conduit d'évacuation 22.

A la sortie de l'étage atmosphérique 1, un réchauffeur 3 peut être prévu où l'extrait liquide est réchauffé à une température comprise entre 95°C et 98°C. Cet extrait liquide réchauffé peut ensuite être traité par entraînement à la vapeur dans un dispositif 4 par exemple constitué d'une colonne a plateaux.

Lors de cet entraînement à la vapeur, l'extrait liquide descend à contre courant d'un flux ascendant de vapeur. Les composés volatils sont entraînés par le flux de vapeur et récupérés par condensation de cette vapeur en ne subissant pas les agressions thermiques engendrées par les traitements d'évaporation ultérieurs.

Ensuite, l'extrait liquide passe dans un évaporateur 5 muni d'un dispositif 6 de condensation et de concentration des vapeurs produites, par exemple par cryoconcentration ou osmose inverse.

Au cours de cette évaporation, la teneur en matières sèches de l'extrait passe à plus de 35% en poids. En fait, il n'y a pas de véritable limite à cette opération de concentration par évaporation. Malgré tout, il est apparu que si la teneur en matières sèches atteint 50% en poids, l'extrait devient trop visqueux pour pouvoir être ensuite facilement mélangé avec l'extrait issu de l'étage sous pression 2.

De la même manière, à la sortie de l'étage sous pression 2, l'extrait liquide passe dans un évaporateur 7.

Au cours de cette opération, la teneur en matières sèches de l'extrait issu de l'étage sous pression 2 est amenée à 15% - 25% en poids, préférablement au voisinage de 20% en poids.

Ensuite les extraits liquides sortant des évaporateurs 5 et 7 sont mélangés dans un mélangeur 8 et le mélange obtenu est de nouveau évaporé dans un évaporateur 9 pour amener sa teneur en matières sèches au voisinage de 40% - 45% en poids. Il n'y a pas en fait de véritable limite à cette évaporation, celle ci étant définie par les paramètres de fonctionnement de l'installation de transformation de cet extrait en poudre.

Préférablement, la teneur en matières sèches de l'extrait issu de l'étage atmosphérique est amenée au voisinage de 40% en poids. En effet, il n'est pas utile de faire subir à l'extrait liquide issu de l'étage atmosphérique un traitement d'évaporation qui amènera sa teneur en matières sèches au voisinage de la teneur en matières sèches du mélange final qui est nécessaire pour la transformation de ce mélange en poudre. Plus particulièrement, l'extrait liquide concentré issu de l'étage atmosphérique 1 étant dilué dans l'extrait liquide concentré issu de l'étage sous pression 2, il est préférable de ne pas faire subir à cet extrait liquide issu de l'étage atmosphérique deux traitements d'évaporation qui amèneront sa teneur en matières sèches au delà de 40% en poids.

On doit s'étonner du fait qu'alors qu'il n'est pas possible, pour les raisons déjà exposées ci dessus, de concentrer par évaporation l'extrait issu de l'étage sous pression 2 à une teneur en matières sèches supérieure à 25% en poids, il est tout à fait possible de concentrer à plus de 40% le mélange des extraits issus des étages atmosphérique et sous pression. Sans vouloir être tenu par une explication, il semble que cela soit dû aux composés particuliers contenus dans l'extrait issu de l'étage atmosphérique qui inhibent la formation d'insolubles à partir des composés présents dans l'extrait issu de l'étage sous pression.

C'est à la sortie de cet évaporateur 9 que le condensat d'évaporation concentré produit par le dispositif 6 ainsi que le produit de l'entraînement à la vapeur réalisé dans le dispositif 4 sont introduits dans l'extrait liquide final avant que cet extrait ne soit transformé en poudre par un dispositif 10 qui peut être une installation de lyophilisation ou une tour d'atomisation.

Le tableau ci-après illustre la mise en oeuvre du procédé selon l'invention.

Au cours de ces essais, l'influence du rapport R (poids d'extrait par cycle/poids de café par cellule), aussi appelé "draw off", a été testée pour chacun des extraits produits par les étages atmosphériques et sous pression. De même, la teneur en matières sèches Tc des extraits avant et après évaporation a été mesurée ainsi que la teneur en matières sèches du mélange final avant évaporation et après évaporation, avant sa transformation en poudre.

Dans ce tableau, l'extrait issu de l'étage atmosphérique est appelé EF et l'extrait issu de l'étage sous pression est appelé EC.

| | R | Tc (%) | Tc après évaporation (%) | Tc du mélange (%) | Tc du mélange après évaporation (%) |
|---|---|---|---|---|---|
| EF | 5,0 | 5,6 | 41,3 | 31,0 | 43,3 |
| EC | 3,0 | 4,9 | 21,0 | | |
| EF | 5,0 | 5,5 | 41,0 | 29,5 | 44,3 |
| EC | 3,7 | 4,4 | 21,0 | | |
| EF | 5,0 | 5,6 | 41,0 | 26,2 | 43,2 |
| EC | 5,0 | 3,2 | 16,0 | | |
| EF | 3,2 | 8,4 | 40,0 | 29,6 | 45,7 |
| EC | 4,5 | 3,8 | 21,0 | | |
| EF | 1,0 | 16,4 | 40,0 | 25,5 | 45,3 |
| EC | 4,5 | 6,1 | 21,0 | | |
| EF | 1,0 | 17,1 | 40,0 | 25,5 | 37,7 |
| EC | 6,0 | 4,8 | 19,5 | | |
| EF | 2,5 | 9,6 | 40,0 | 25,5 | 45,6 |
| EC | 6,0 | 3,2 | 18,5 | | |
| EF | 2,5 | 10,2 | 40,0 | 33,1 | 47,6 |
| EC | 4,0 | 4,0 | 18,5 | | |
| EF | 3,5 | 7,7 | 40,0 | 25,5 | 47,2 |
| EC | 6,0 | 3,3 | 17,0 | | |

Il apparaît clairement que, grâce au procédé selon l'invention, il est possible d'obtenir un extrait final pouvant présenter une teneur en matières sèches supérieure à 40% en poids obtenu par extraction séparée en ne concentrant l'extrait issu de l'étage sous pression qu'à une teneur en matières sèches voisine de 20% en poids et en concentrant l'extrait issu de l'étage atmosphérique à une teneur en matières sèches voisine de 40% en poids tout en ne dénaturant pas l'extrait issu de cet étage atmosphérique dont les composés volatils ont été récupérés avant les traitements par évaporation et réintroduits après ceux ci alors que les composés volatils contenus dans l'extrait issu de l'étage sous pression sont éliminés.

## Revendications

1. Procédé pour la production de café instantané soluble en poudre par extraction séparée de café rôti moulu contenu dans des cellules de percolation, en produisant un premier extrait liquide issu de l'étage atmosphérique et un second extrait liquide issu de l'étage sous pression, le premier extrait liquide étant évaporé jusqu'à une concentration en matières sèches supérieure à 35% en poids et le second extrait liquide étant évaporé jusqu'à une concentration en matières sèches inférieure à 25% en poids, les deux extraits liquides étant ensuite mélangés, le mélange des deux extraits liquides étant concentré par évaporation pour amener sa teneur en matières sèches à plus de 40% en poids, les vapeurs d'évaporation du premier extrait liquide étant condensées et concentrées, le concentré obtenu étant réintroduit dans le mélange des deux extraits liquides après évaporation de celui-ci.

2. Procédé selon la revendication 1, dans lequel le premier extrait liquide est concentré à une teneur en matières sèches de 40% en poids.

3. Procédé selon la revendication 1, dans lequel le premier extrait liquide subit, à la sortie du groupe de l'étage atmosphérique et avant sa concentration par évaporation, un entraînement à la vapeur, la vapeur obtenue étant condensée et réintroduite dans le mélange des deux extraits liquides après évaporation de ce mélange.

## Claims

1. A process for the production of soluble instant coffee in powder form by split extraction of ground roasted coffee in percolation cells to produce a first liquid extract from the atmospheric stage and a second liquid extract from the pressure stage, the first liquid extract then being evaporated to a dry matter concentration above 35% by weight and the second liquid extract being evaporated to a dry matter concentration below 25% by weight, the two liquid extracts then being mixed, the mixture of the two liquid extracts being concentrated by evaporation to bring its dry matter content to more than 40% by weight the evaporation vapours of the first liquid extract being condensed and concentrated and the concentrate obtained being reintroduced into the mixture of the two liquid extracts after evaporation thereof.

2. A process as claimed in claim 1, in which the first liquid extract is concentrated to a dry matter content of 40% by weight.

3. A process as claimed in claim 1, in which the first liquid extract, on leaving the atmospheric stage and before concentration by evaporation, is subjected to stripping with steam, the steam obtained being condensed and reintroduced into the mixture of the two liquid extracts after evaporation of this mixture.

## Patentansprüche

1. Verfahren zur Herstellung von pulverförmigem Instant-Löskaffee durch getrennte Extraktion von in Perkolationszellen enthaltenem gemahlenem geröstetem Kaffee, indem ein erstes flüssiges Extrakt, das aus der atmosphärischen Stufe hervorgeht, und ein zweites flüssiges Extrakt, das aus der unter Druck stehenden Stufe hervorgeht, erzeugt werden, das erste flüssige Extrakt bis auf eine Trockenmaterialkonzentration von mehr als 35 Gew.-% und das zweite flüssige Extrakt bis auf eine Trockenmaterialkonzentration von weniger als 25 Gew.-% verdampft wird, die beiden flüssigen Extrakte anschließend vermischt werden, die Mischung aus den beiden flüssigen Extrakten durch Verdampfung konzentriert wird, um ihren Trockenmaterialgehalt auf mehr als 40 Gew.-% zu bringen, die Dämpfe der Verdampfung des ersten flüssigen Extraktes kondensiert und konzentriert werden, und das erhaltene Konzentrat in die Mischung aus den beiden flüssigen Extrakten nach der Verdampfung dieser Mischung wiedereingebracht wird.

2. Verfahren nach Anspruch 1, bei welchem das erste flüssige Extrakt auf einen Trockenmaterialgehalt von 40 Gew.-% konzentriert wird.

3. Verfahren nach Anspruch 1, bei welchem das erste flüssige Extrakt am Ausgang der Gruppe der atmosphärischen Stufe und vor seiner Verdampfungs-Konzentration einem Mitreißen in Dampf unterworfen wird, wobei der erhaltene Dampf kondensiert und in die Mischung aus den beiden flüssigen Extrakten nach der Verdampfung dieser Mischung wiedereingebracht wird.
